# EUROPÄISCHE PATENTSCHRIFT

(11) **EP 2 116 675 B1**
(45) Veröffentlichungstag und Bekanntmachung des Hinweises auf die Patenterteilung: **15.03.2017**
(21) Anmeldenummer: 09006118.5
(22) Anmeldetag: 05.05.2009
(51) Int. Cl.: E04H 12/08, F03D 1/00, F03D 13/20

(54) **Turm für eine Windenergieanlage mit Flanschstück zur Verbindung von Segmenten**
Tower for a wind farm with flange piece for connection of segments
Tour pour une éolienne avec partie de bride pour connection de segments

(30) Priorität: 07.05.2008 DE 202008006307 U
(43) Veröffentlichungstag der Anmeldung: 11.11.2009
(73) Patentinhaber: Senvion GmbH, 22297 Hamburg (DE)
(72) Erfinder: Meesenburg, Uwe, 25840 Friedrichstadt (DE); Schüttendiebel, Ralf, 49074 Osnabrück (DE)
(74) Vertreter: Seemann & Partner Patentanwälte mbB

(56) Entgegenhaltungen:
- EP-A1- 1 889 987
- WO-A1-02/38891
- WO-A1-2004/090263
- JP-A- 2000 265 571

## Beschreibung

Die Erfindung betrifft einen Turm für eine Windenergieanlage. Bekannte Windenergieanlagen weisen Türme auf, die üblicherweise, z.B. aus Transportgründen, mehrere Segmente aufweisen. Diese Segmente werden in der Regel mit Flanschverbindungen, insbesondere T- oder L-förmige Schraubenflansche, miteinander verbunden. Insbesondere bei großen Türmen mit mehr als 3,5 oder 4 Metern Durchmesser erweist es sich in der Herstellung als sehr schwierig, die gewalzten Flansche mit ausreichender Genauigkeit mit der Turmwandung zu verbinden. In der Praxis kommt es durch das Verschweißen von Turmwandung und Flansch häufig zu einem Verzug des Flansches. Hierbei tritt häufig eine Flanschschiefstellung oder Winkelabweichung, ein so genanntes "Flanschkrempeln" auf, mit der Folge, dass die Kontaktflächen der Flansche nicht mehr eben aufeinander liegen. Derartige klaffende Flansche weisen durch ständige kleine Relativbewegungen (das sogenannte Flanschatmen) eine erheblich reduzierte Lebensdauer auf, weshalb im Stand der Technik aufwendige Reparaturmaßnahmen durchgeführt werden müssen. Vermeiden lassen sich diese Probleme derzeit nur durch eine hochgenaue und damit sehr teure Fertigung, die entweder eine Nachbearbeitung der Flansche nach dem Verschweißen oder ein aufwendiges Richten verzogener Flansche durch Wärmebehandlung erfordert.
JP 2000 265571 A offenbart eine Verbindung von zwei Rohren, bei der schräge Verbindungsflächen vorgesehen sind.
WO 2004/090263 A1 offenbart ein komplexes Verfahren zum Verbinden von Segmenten eines Turms einer Windenergieanlage.

Dieses Dokument offenbart die Merkmale des Oberbegriffs des Anspruchs 1.

Aufgabe der vorliegenden Erfindung ist die Bereitstellung eines Turms einer Windenergieanlage mit einer Flanschverbindung, die die vorstehenden Nachteile vermeidet. Insbesondere soll ein Flansch bereitgestellt werden, der sich preisgünstig fertigen lässt und nach dem Verschweißen keiner Nachbearbeitung bedarf.
Gelöst wird die Aufgabe durch einen Turm für eine Windenergieanlage, wobei der Turm eine aus Segmenten ausgeführte Turmwandung aufweist, wobei der Turm ein Flanschstück und ein Anschlussbauteil aufweist, wobei das Flanschstück einen Flanschkragen zur Verbindung eines Segments mit einem Anschlussbauteil in einer Verbindungsebene umfasst, wobei der Flanschkragen einseitig mit der Turmwandung verbindbar ist und eine der Turmwandung abgewandte Kontaktfläche aufweist, das derart weitergebildet wird, dass die Kontaktfläche wenigstens bereichsweise konvex ausgebildet ist, wobei in dem Bereich der Kontaktfläche (42), der insbesondere der Turmwandung (10) unmittelbar gegenüber liegt, ein Bereich der Kontaktfläche (42) als im Wesentlichen in der Verbindungsebene (40) liegende Kontaktebene (44) ausgebildet ist und durch ein Verbinden und Vorspannen mittels Zuganker oder Schraubbolzen durch Befestigungsbohrungen (26) die Kontaktebene (44) gegen das Anschlussbauteil (50) verspannt wird, wobei die Vorspannkraft die Kontaktebene sicher an die Verbindungsebene des Anschlussbauteils heranzieht.

Hierbei liegt der Erfindung die überraschende Erkenntnis zugrunde, dass eine konvex ausgeführte Flanschkontaktfläche zwar immer zu einer Flanschklaffung in einem eingegrenzten Bereich des Flanschstückes führt, andererseits aber durch die konvexe Formgebung immer ein anderer Bereich der Flanschkontaktfläche in sicherem Kontakt mit dem Anschlussbauteil steht, wodurch die Lebensdauer der Flanschverbindung insgesamt verbessert wird. Insbesondere vermeidet die Erfindung das besonders kritische Kantentragen eines Flansches.

Konvex bezeichnet hierbei insbesondere eine im Wesentlichen nach außen vorgewölbte Fläche, wobei die Wölbung sowohl kontinuierlich gekrümmt als auch polygonförmig ausgebildet sein kann. Die Erfindung ermöglicht es nunmehr, eine erheblich größere Toleranz in der Produktion eines Turms, insbesondere eine erhöhte Winkeltoleranz der Flansche, zuzulassen.

Erfindungsgemäß ist vorgesehen, dass in dem Bereich der Kontaktfläche, der insbesondere der Turmwandung unmittelbar gegenüber liegt, ein Bereich der Kontaktfläche als im Wesentlichen in der Verbindungsebene liegende Kontaktebene ausgebildet ist. Es hat sich gezeigt, dass gerade der sichere Kontakt der Kontaktfläche im Bereich der Turmwandung einen sehr vorteilhaften Einfluss auf die Lebensdauer der Flanschverbindung ausübt.

Eine bevorzugte Ausführungsform der Erfindung sieht dabei vor, dass die Kontaktfläche des Flanschstücks im Wesentlichen kontinuierlich gekrümmt ausgebildet ist. Eine kontinuierliche Krümmung weist den Vorteil auf, dass für einen großen Bereich von Flanschschiefstellungen immer ein Bereich der Kontaktfläche einen sicheren Kontakt zum Anschlussbauteil aufweist.

Ein Anschlussbauteil kann hierbei sowohl ein weiteres Turmsegment oder auch dem Turm benachbarte Bauteile, wie ein Fundament oder ein Anschluss zu dem Maschinenhaus der Windenergieanlage, sein.

Eine weitere bevorzugte Ausführungsform der Erfindung sieht dabei vor, dass die Kontaktfläche im Wesentlichen nach Art eines Polygonzugs ausgebildet ist.

Eine polygonartige Ausführung ist besonders einfach und somit preisgünstig zu fertigen.

Eine bevorzugte Weiterbildung sieht dabei vor, dass die Kontaktfläche mindestens eine Fläche aufweist, die von der Verbindungsebene in einem spitzen Winkel zurücklaufend ausgebildet ist. Unter zurücklaufend ist im Rahmen der Erfindung insbesondere weglaufend und/oder wegklaffend gemeint. Es ergibt sich insbesondere eine Materialrücknahme, die vorzugsweise keilförmig ist, wobei die Keilflächen auch gekrümmt sein können.

In einer bevorzugten Ausführungsform ist das Flanschstück im Wesentlichen in Form eines T-Flansches ausgeführt. T-Flansche ermöglichen die Übertragung besonders hoher Belastungen auf das Anschlussbauteil.

Eine weitere bevorzugte Ausführung sieht vor, dass die Kontaktfläche im Wesentlichen symmetrisch zur Mitte der Kontaktfläche ausgeführt ist. Eine symmetrische Kontaktfläche ermöglicht es vorteilhaft, Winkeltoleranzen in beiden Richtungen gleich gut aufzunehmen.

Eine weitere bevorzugte Ausführung sieht vor, dass insbesondere in der Mitte der Kontaktfläche ein Bereich der Kontaktfläche als im Wesentlichen in der Verbindungsebene liegende Kontaktebene ausgebildet ist. Somit wird insbesondere bei einem hochbelasteten T-Flansch sichergestellt, dass bei Winkelabweichungen ein vorbestimmter Bereich des Flanschstücks sicheren Kontakt zum Anschlussbauteil aufweist. Beim T-Flansch handelt es sich hier um den mittleren Bereich direkt gegenüber dem Anschluss zur Turmwandung, weil ein Kontakt in diesem Bereich für die Lebensdauer des Flansches besonders günstig ist.

Eine vorteilhafte Weiterbildung sieht hierbei vor, dass von der (mittleren) Kontaktebene wenigstens eine seitliche Kontaktfläche, vorzugsweise zwei seitliche Kontaktflächen eines T-Flansches, zu ihren Rändern hin eine im Wesentlichen keilförmige Materialrücknahme gegenüber der Kontaktebene aufweisen. Somit wird eine besonders einfach zu fertigen, aber die Lebensdauer am effektivsten steigernde Form der Kontaktfläche bereitgestellt.

Eine weitere vorteilhafte Weiterbildung sieht hierbei vor, dass die Abklaffung der Materialrücknahme oder der Abwinkelung am Flanschrand von der Kontaktebene in etwa die gleiche Größenordnung aufweist, wie die zu erwartende maximale Toleranz bei einer Flanschschiefstellung durch den Produktionsprozess. Somit wird vorteilhaft sichergestellt, dass auch bei der maximal zu erwartenden Flanschschiefstellung (Winkeltoleranz) die Kontaktebene noch sicher am Anschlussbauteil anliegt.

Die Erfindung wird nachstehend ohne Beschränkung des allgemeinen Erfindungsgedanken anhand von Ausführungsbeispielen unter Bezugnahme auf die Zeichnungen exemplarisch beschrieben, wobei bezüglich aller im Text nicht näher erläuterten erfindungsgemäßen Einzelheiten ausdrücklich auf die Zeichnungen verwiesen wird.

Es zeigen:
- Fig. 1: eine Übersicht einer Windenergieanlage;
- Fig. 2: schematische Darstellungen von Ausführungsformen eines Flanschstücks und
- Fig. 3: eine schematische Darstellung einer weiteren Ausführungsform eines Flanschstücks.

In den folgenden Figuren sind jeweils gleiche oder gleichartige Elemente bzw. Teile mit denselben Bezugsziffern versehen, so dass von einer entsprechenden erneuten Vorstellung abgesehen wird.

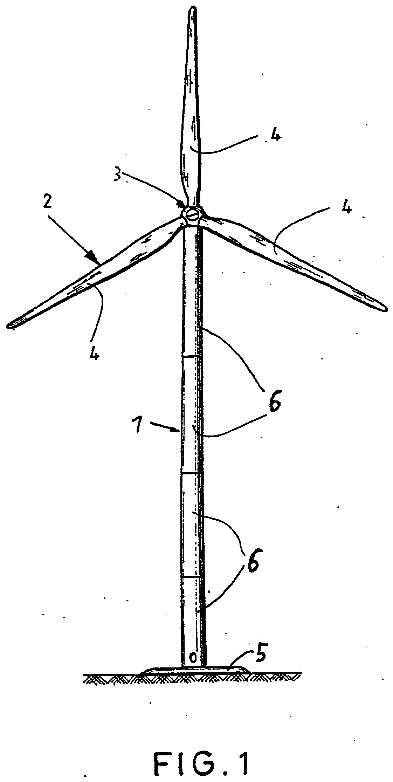

Fig. 1 zeigt eine Windenergieanlage mit einem Turm 1, einem auf dem Turm angeordnetem Maschinenhaus 3, sowie einem um eine im Wesentlichen horizontalen Rotorachse drehbar gelagerten Rotor 2 mit drei Rotorblättern 4. Der Turm 1 ist auf einem Fundament 5 angeordnet und ist aus mehreren Segmenten 6, im dargestellten Fall aus vier Rohrsegmenten oder auch Turmschüssen, aufgebaut. Die Segmente weisen drei horizontale Verbindungsebenen untereinander sowie je eine horizontale Verbindungsebene zu einem Fundament 5 sowie dem Maschinenhaus 3 auf. Generell ist bei der Erfindung auch an Ausführungen von Türmen von Windenergieanlagen gedacht, bei denen die einzelnen Turmschüsse aus mehreren, z.B. drei Segmenten bestehen. Somit entstehen dann neben den oben beschriebenen horizontalen Verbindungsebenen auch vertikale Verbindungsebenen, für die die erfindungsgemäßen Flanschstücke vorteilhaft vorgesehen sind.

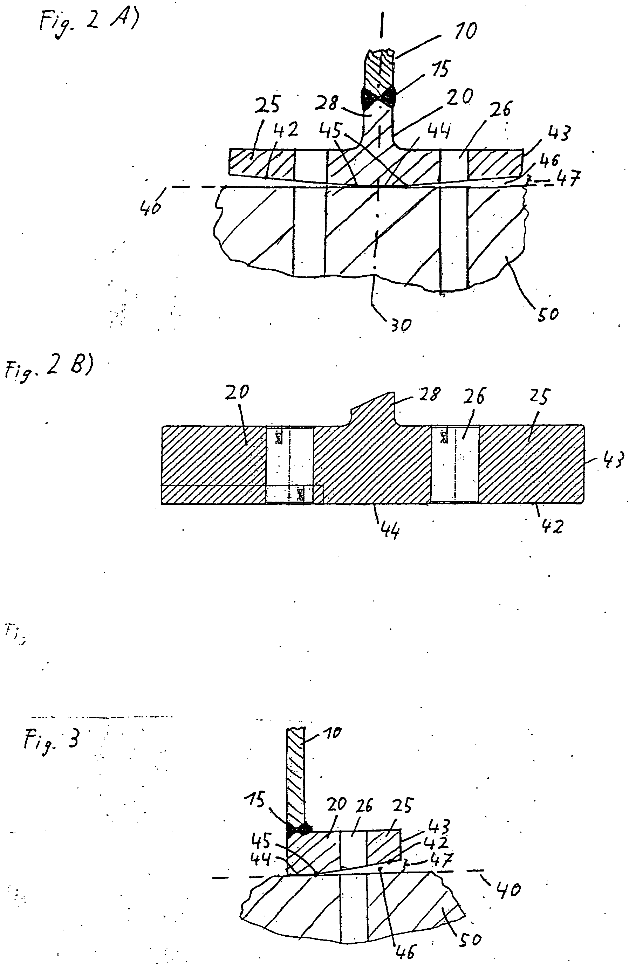

Fig. 2 A) zeigt schematisch eine vorteilhafte Ausführungsform eines Flanschstücks 20 eines erfindungsgemäßen Turms. Das Flanschstück 20 ist in Form eines zur Symmetrielinie 30 im Wesentlichen symmetrischen T-Flansches ausgeführt und weist beidseitig einen Flanschkragen 25 mit Befestigungsbohrungen 26 auf. In der gezeigten Ausführung weist das Flanschstück 20 einen Vorschweißhals 28 auf, mit welchem über eine Schweißnaht 15 die Turmwandung 10 eines Segmentes 6, z.B. eines Rohrturms, verbunden ist. Auf der der Verbindung mit der Turmwandung 10 abgewandten Seite des Flanschkragens 25 weist das Flanschstück 20 eine Kontaktfläche 42 auf, die einer Verbindungsebene 40 mit einem Anschlussbauteil 50 zugewandt ist.

Bei dem Anschlussbauteil handelt es sich bevorzugt um ein weiteres Segment 6 eines Turms 1 einer Windenergieanlage oder um ein Fundament 5 oder ein Anschlussbauteil 50 zu einem Maschinenhaus 3 einer Windenergieanlage. Die dem Anschlussbauteil 50 zugewandte Kontaktfläche 42 des Flanschstücks 20 ist nach Art eines Polygonzugs ausgeführt. Eine mittlere Kontaktebene 44 knickt in zwei Eckpunkten 45 ab in zwei seitliche Kontaktflächen 42, welche durch je einen Flanschrand 43 begrenzt werden. Zwischen der gedachten Ebene durch die Kontaktebene 44 und den seitlichen Kontaktflächen 42 bildet sich so jeweils eine keilförmige Materialrücknahme 46 aus. Die Abklaffung der Materialrücknahme 47 am Flanschrand 43 bzw. die Abwinkelung am Flanschrand 43 von der Kontaktebene 44 weist hierbei einen vorbestimmten Betrag auf, der unter anderem abhängig ist von der Dicke und der Breite des Flanschkragens 25, der Stärke der Turmwandung 10, den Materialeigenschaften der verwendeten Werkstoffe, dem Produktionsprozess, insbesondere dem Schweißverfahren und den dadurch entstehenden Winkeltoleranzen sowie auch dem Montageverfahren der Flanschverbindung inklusive der Art der verwendeten Zuganker bzw. Schraubbolzen.

Der Betrag der Abklaffung der Materialrücknahme wird bevorzugt rechnerisch (z.B. durch bekannte Computersimulationen, z.B. FEM), experimentell durch Versuche an Modellen oder realen Flanschverbindungen oder durch Kombination der genannten Methoden bestimmt.

Sollte der dargestellte T-Flansch durch Fertigungstoleranzen, insbesondere durch Verzug beim Verschweißen eine erhöhte Flanschschiefstellung aufweisen, so bildet sich diese Winkeltoleranz in der Regel in Form einer Verkippung des Flanschstücks 20 um die Schweißnaht 15 aus. Da erfindungsgemäß vorgesehen ist, die Abklaffung der Materialrücknahme 47 bzw. die Abwinkelung am Flanschrand 43 von der Kontaktebene 44 in der gleichen Größenordnung vorzusehen, wie die zu erwartende maximale Toleranz bei einer Flanschschiefstellung durch den Produktionsprozess, liegt im schlimmsten Fall die Kontaktfläche 42 einer Seite des Flanschkragens 25 flächig auf der Verbindungsebene 40 des Anschlussbauteils 50 auf.

Die Kontaktebene 44 wird im nicht vorgespannten Zustand auf einer Seite im Eckpunkt 45 in einem sehr spitzen Winkel zur Verbindungsebene 40 geneigt sein. Die Kontaktfläche 42 der anderen Seite des Flanschkragens 25 wird in einem etwas weniger spitzen Winkel von der Verbindungsebene 40 wegklaffen. Wird das Flanschstück 20 nun in an sich bekannter Weise mit dem Anschlussbauteil 50 mittels nicht dargestellter Zuganker oder Schraubbolzen durch die Befestigungsbohrungen 26 verbunden und vorgespannt, so wird die Vorspannkraft die Kontaktebene 44 sicher an die Verbindungsebene 40 heranziehen. Somit ist sichergestellt, dass der für die Lebensdauer der Flanschverbindung wichtige Bereich der Kontaktfläche 42 im Bereich der Verbindung an die Turmwand 10, nämlich die Kontaktebene 44, sicher gegen das Anschlussbauteil 50 verspannt wird.

Ein im Stand der Technik bei klaffenden Flanschen auftretendes Atmen des Flansches im Bereich der Kontaktebene 44, welches die Lebensdauer der Verbindung stark reduziert, wird durch die Erfindung sicher vermieden.

Ist die Flanschschiefstellung geringer als oben beschrieben, liegt ebenfalls einer der beiden Eckpunkte 45 sicher auf dem Anschlussbauteil 50 auf und die benötigte Vorspannkraft zum sicheren Verspannen der Kontaktebene 44 ist geringer als oben beschrieben, so dass insgesamt günstigere Verhältnisse vorliegen.

Die Materialrücknahme 47 ist in der Fig. 2 A) zur besseren Übersichtlichkeit stark übertrieben dargestellt.

Fig. 2 B) zeigt die maßstäbliche Geometrie eines erfindungsgemäßen T-Flanschstücks.

Gezeigt ist ein Flanschstück 20 für einen Rohrturm mit etwa 6m Durchmesser und einer Stärke der Turmwandung 10 von 50 mm. Die Breite des Flanschkragens 25 beträgt etwa 465 mm, die Dicke etwa 92 mm. Bei dieser beispielhaften Ausführung beträgt die Breite der Kontaktebene 44 etwa 120 mm, die Abklaffung der Materialrücknahme 47 beträgt bevorzugt zwischen 0,1 und 5 mm, besonders bevorzugt zwischen 0,4 und 1,5 mm, insbesondere bevorzugt etwa 0,7 mm.

Bei kleineren oder größeren Flanschabmessungen liegt die Abklaffung der Materialrücknahme 47 bevorzugt zwischen 0,2 und 10 Promille der Breite des Flanschkragens 25, insbesondere etwa bei 1,5 Promille der Breite des Flanschkragens 25. Fig. 3 zeigt schematisch eine weitere vorteilhafte Ausführungsform einer Flanschstücks 20 eines erfindungsgemäßen Turms. Das Flanschstück 20 ist in Form eines L-Flansches mittels einer Schweißnaht 15 an die Turmwandung 10 angebunden. Die geometrischen Verhältnisse entsprechen weitgehend einer Hälfte des oben beschriebenen T-Flansches, weshalb nicht weiter auf sie eingegangen wird. Die Schweißnaht 15 ist direkt mit der einen Seite des Flanschkragens 25 verbunden, d.h. in dieser Ausführungsform entfällt der Vorschweißhals 28, was eine besonders kostengünstige Herstellung des Flanschstücks 20 ermöglicht. Allerdings ist diese Flanschverbindung auch bei weitem nicht so belastungsfähig wie die in Fig. 2 gezeigte Ausführung, weshalb sie nur für geringe Belastungen vorteilhaft ist. Bei mittleren Belastungen können auch Zwischenstufen der beiden Ausführungen gewählt werden, z.B. L-Flansche mit Vorschweißhals oder T-Flansche ohne Vorschweißhals.

### Bezugszeichenliste

- 1: Turm
- 2: Rotor
- 3: Maschinenhaus
- 4: Rotorblatt
- 5: Fundament
- 6: Segment
- 10: Turmwandung
- 15: Schweißnaht
- 20: Flanschstück
- 25: Flanschkragen
- 28: Vorschweißhals
- 26: Befestigungsbohrung
- 30: Symmetrielinie
- 40: Verbindungsebene
- 42: Kontaktfläche
- 43: Flanschrand
- 44: Kontaktebene
- 45: Eckpunkt
- 46: Materialrücknahme
- 47: Abklaffung der Materialrücknahme
- 50: Anschlussbauteil

## Patentansprüche

1. Turm (1) für eine Windenergieanlage, wobei der Turm (1) eine aus Segmenten (6) ausgeführte Turmwandung (10) aufweist, wobei der Turm ein Flanschstück (20) und ein Anschlussbauteil (50) aufweist, wobei das Flanschstück (20) einen Flanschkragen (25) zur Verbindung eines Segments (6) mit dem Anschlussbauteil (50) in einer Verbindungsebene (40) umfasst, wobei der Flanschkragen (25) einseitig mit der Turmwandung (10) verbindbar ist und eine der Turmwandung (10) abgewandte Kontaktfläche (42) aufweist, wobei binden und Vorspannen mittels Zuganker oder Schraubbolzen durch Befestigungsbohrungen (26) die Kontaktebene (44) gegen das Anschlussbauteil (50) verspannt wird, wobei die Vorspannkraft die Kontaktebene (44) sicher an die Verbindungsebene (40) des Anschlussbauteils (50) heranzieht,
**dadurch gekennzeichnet, dass** die Kontaktfläche (42) wenigstens bereichsweise konvex ausgebildet ist, wobei in dem Bereich der Kontaktfläche (42), der insbesondere der Turmwandung (10) unmittelbar gegenüber liegt, ein Bereich der Kontaktfläche (42) als im Wesentlichen in der Verbindungsebene (40) liegende Kontaktebene (44) ausgebildet ist.

2. Turm (1) nach dem vorhergehenden Anspruch, **dadurch gekennzeichnet, dass** die Kontaktfläche (42) im Wesentlichen kontinuierlich gekrümmt ausgebildet ist.

3. Turm (1) nach einem der vorhergehenden Ansprüche, **dadurch gekennzeichnet, dass** die Kontaktfläche (42) im Wesentlichen nach Art eines Polygonzugs ausgebildet ist.

4. Turm (1) nach dem vorhergehenden Anspruch, **dadurch gekennzeichnet, dass** die Kontaktfläche (42) mindestens eine Fläche aufweist, die von der Verbindungsebene (40) in einem spitzen Winkel zurücklaufend ausgebildet ist.

5. Turm (1) nach einem der vorhergehenden Ansprüche, **dadurch gekennzeichnet, dass** das Flanschstück (20) im Wesentlichen in Form eines T-Flansches ausgeführt ist.

6. Turm (1) nach dem vorhergehenden Anspruch, **dadurch gekennzeichnet, dass** die Kontaktfläche (42) im Wesentlichen symmetrisch zur Mitte der Kontaktfläche (42) ausgeführt ist.

7. Turm (1) nach einem der vorhergehenden Ansprüche, **dadurch gekennzeichnet, dass** in der Mitte der Kontaktfläche (42) ein Bereich der Kontaktfläche (42) als im Wesentlichen in der Verbindungsebene (40) liegende Kontaktebene (44) ausgebildet ist.

8. Turm (1) nach vorstehendem Anspruch, **dadurch gekennzeichnet, dass** von der, insbesondere mittleren, Kontaktebene (44) wenigstens eine seitliche Kontaktfläche (42), vorzugsweise zwei seitliche Kontaktflächen (42) eines T-Flansches, zu ihren Rändern hin eine im Wesentlichen keilförmige Materialrücknahme (46) gegenüber der Kontaktebene (44) aufweisen.

9. Turm (1) nach einem der vorstehenden Ansprüche, **dadurch gekennzeichnet, dass** die Abklaffung der Materialrücknahme (47) oder der Abwicklung am Flanschrand (43) von der Kontaktebene (44) in etwa die gleiche Größenordnung aufweist, wie die zu erwartende maximale Toleranz bei einer Flanschschiefstellung durch den Produktionsprozess.

## Claims

1. A tower (1) for a wind farm, wherein the tower (1) has a tower wall (10) configured from segments (6), wherein the tower has a flange piece (20) and a connection component (50), wherein the flange piece (20) comprises a flange collar (25) for connecting a segment (6) to the connection component (50) in a connecting plane (40), wherein the flange collar (25) can be connected to the tower wall (10) on one side and has a contact surface (42) which faces away from the tower wall (10), wherein by connection and prestressing by means of tension rods or bolts through mounting bores (26) the contact plane (44) is braced against the connection component (50), wherein the prestressing force securely brings the contact plane (44) towards the connecting plane (40) of the connection component (50), **characterized in that** the contact surface (42) is designed convexly, at least in regions, wherein in the region of the contact surface (42) which is in particular located immediately opposite the tower wall (10), a region of the contact surface (42) is designed as a contact plane (44) lying substantially in the connecting plane (40).

2. The tower (1) according to the preceding claim, **characterized in that** the contact surface (42) has a substantially continuously curved form.

3. The tower (1) according to any one of the preceding claims, **characterized in that** the contact surface (42) is substantially formed in the manner of a polygon.

4. The tower (1) according to the preceding claim, **characterized in that** the contact surface (42) has at least one surface which is formed so that it runs back from the connecting plane (40) at an acute angle.

5. The tower (1) according to any one of the preceding claims, **characterized in that** the flange piece (20) is substantially configured in the form of a T flange.

6. The tower (1) according to the preceding claim, **characterized in that** the contact surface (42) is substantially configured symmetrically to the center of the contact surface (42).

7. The tower (1) according to any one of the preceding claims, **characterized in that** in the center of the contact surface (42) a region of the contact surface (42) is formed as a contact plane (44) lying substantially in the connecting plane (40).

8. The tower (1) according to the preceding claim, **characterized in that** of the, in particular central, contact plane (44) at least one lateral contact surface (42), preferably two lateral contact surfaces (42) of a T flange, have a substantially wedge-shaped material recess (46) with respect to the contact plane (44) towards its/their edges.

9. The tower (1) according to any one of the preceding claims, **characterized in that** the protusion or divergence of the material recess (47) or the configuration at the flange edge (43) of the contact plane (44) has approximately the same order of magnitude as the maximum tolerance to be expected during a flange tilting by the production process.

## Revendications

1. Tour (1) pour une éolienne, dans laquelle la tour (1) présente une paroi de tour (10) formée de segments (6), dans laquelle la tour comprend une pièce formant bride (20) et un composant de connexion (50), dans laquelle la pièce formant bride (20) comprend une collerette de bride (25) pour le raccordement d'un segment (6) à l'élément de connexion (50) dans un plan de liaison (40), ladite collerette de bride (25) étant apte à être reliée sur un côté à la paroi de tour (10) et présentant une surface de contact (42) à l'opposé de la paroi de tour (10), le plan de contact (44) étant serré contre la pièce de raccordement (50) par liaison et précontrainte au moyen de tirants ou boulons à travers des trous de montage (26), la force de précontrainte du plan de contact (44) étant parfaitement utilisée par rapport au plan de liaison (40) du composant de connexion (50), **caractérisée en ce que** la surface de contact (42) présente une forme au moins partiellement convexe, ce par quoi, dans la zone de la surface de contact (42) qui est située en particulier directement en face de la paroi de tour (10), une zone de la surface de contact (42) est formée sensiblement dans le plan de liaison (40) dans lequel se trouve le plan de contact (44).

2. Tour (1) selon la revendication précédente, **caractérisée en ce que** la surface de contact (42) est formée de façon sensiblement continue et incurvée.

3. Tour (1) selon l'une quelconque des revendications précédentes, **caractérisée en ce que** la surface de contact (42) est formée sensiblement à la manière d'un tracé polygonal.

4. Tour (1) selon la revendication précédente, **caractérisée en ce que** la surface de contact (42) présente au moins une surface, laquelle est formée en retrait, selon un angle aigu avec le plan de liaison (40).

5. Tour (1) selon l'une des revendications précédentes, **caractérisée en ce que** la pièce formant bride (20) est réalisée sensiblement sous la forme d'une bride en T.

6. Tour (1) selon la revendication précédente, **caractérisée en ce que** la surface de contact (42) est conçue de manière sensiblement symétrique par rapport au centre de la surface de contact (42).

7. Tour (1) selon l'une quelconque des revendications précédentes, **caractérisée en ce qu'**au centre de la surface de contact (42), une partie de la surface de contact (42) est formée sensiblement dans le plan de liaison (40) dans lequel se trouve le plan de contact (44).

8. Tour (1) selon la revendication précédente, **caractérisée en ce qu'**elle présente, depuis, en particulier le milieu, du plan de contact (44), au moins une surface latérale de contact (42), de préférence deux surfaces latérales de contact (42) d'une bride en T, dont les bords inférieurs sont sensiblement selon un retrait de matériau en forme de coin (46) par rapport au plan de contact (44).

9. Tour (1) selon l'une quelconque des revendications précédentes, **caractérisée en ce que** l'interstice du retrait de matériau (47), ou l'extrémité de la bride (43) vis-à-vis du plan de contact (44) présente à peu près le même ordre de grandeur que la tolérance maximale attendue par le processus de fabrication pour un mauvais positionnement de la bride.
